Europäisches Patentamt

European Patent Office

Office européen des brevets

(11) Veröffentlichungsnummer: **0 007 119**
**B1**

(12) **EUROPÄISCHE PATENTSCHRIFT**

(21) Anmeldenummer: **79200243.8**

(22) Anmeldetag: **18.05.79**

(51) Int. Cl.³: **B 65 G 57/24**

---

(54) Vorrichtung zum lagenweisen Stapeln von Stückgut auf einer Palette.

---

(30) Priorität: **19.07.78 DE 2831621**

(43) Veröffentlichungstag der Anmeldung:
**23.01.80 Patentblatt 80/2**

(45) Bekanntmachung des Hinweises auf die Patenterteilung:
**11.02.81 Patentblatt 81/6**

(84) Benannte Vertragsstaaten:
**BE CH DE FR GB IT NL SE**

(56) Entgegenhaltungen:
DE - A1 - 2 451 375
DE - A1 - 2 554 490
DE - A1 - 2 603 887
DE - A1 - 2 622 636
DE - A1 - 2 718 338
DE - B - 1 936 554
DE - B - 2 019 953
DE - B2 - 2 334 651
US - A - 3 954 190
US - A - 3 986 621
US - A - 4 024 965
US - A - 4 067 456

(73) Patentinhaber: **Möllers Maschinenfabrik GmbH
Sudhoferweg 93
D-4720 Beckum (DE)**

(72) Erfinder: **Kaul, Günther
Kolpingstrasse 2
D-4720 Beckum (DE)**

(72) Erfinder: **Grünert, Wilfried, Ing.grad.
Klosterkamp 9
D-4720 Beckum (DE)**

(72) Erfinder: **Aufenvenne, Wilhelm, Ing.grad.
Everkeweg 42
D-4720 Beckum (DE)**

(74) Vertreter: **Meinke, Julius, Dipl.-Ing.
Westenhellweg 67
D-4600 Dortmund 1 (DE)**

---

Courier Press, Leamington Spa, England.

## Vorrichtung zum lagenweisen Stapeln von Stückgut auf einer Palette

Die Erfindung betrifft eine Vorrichtung zum lagenweisen Stapeln von Stückgut auf einer Ladepalette, mit einer eine Anlaufleiste aufweisenden Einlaufrollenbahn und einer dieser nachgeschalteten, aus ortsfesten Tragschienen gebildeten Zwischenstation, auf der von einer Förderanlage der Einlaufrollenbahn zugeführte Stückgüter mittels eines Überführungsgliedes lagenweise zusammengesetzt werden, und mit einem in einer geschlossenen Bahnkurve bewegten Gabelheber, welcher jeweils eine Stückgutlage in der Zwischenstation aufnimmt, hochhebt, vor im wesentlichen senkrechte Abstreifer bewegt und auf die Ladepalette absenkt und anschließend durch die Abstreifer hindurch zurückgezogen wird.

Bei bekannten Maschinen dieser Art (DE-C-1 198 286) hat es sich gezeigt, daß in Abhängigkeit von der Art der verwendeten Stückgüter, beispielsweise besonders Säcke mit relativ leichten Kunststoffgranulaten dazu neigen, sich an kritischen Stellen der Vorrichtung zu deformieren, was der Stabilität der zu bildenden Stapel sehr abträglich ist, vor allem in Verbindung mit immer höher üblich werdenden bzw. geforderten Stapeln (bis ca. 2,50 m) und der sogenannten palettenlosen Paketierung. Besonders kritisch ist dabei der Bereich der Anlaufleiste am Ende der Einlaufrollenbahn, sowohl was die Deformation der Säcke beim Anlaufen als auch was die nachfolgende Überführung von der Einlaufrollenbahn auf die Zwischenstation betrifft, da infolge der zunächst eingetretenen Deformation der Säcke der der Anlaufleiste unmittelbar anliegende Sack dazu neigt, sich zu verdrehen und damit die gesamte jeweilige Sackzeile in Unordnung zu bringen. Die vorbeschriebenen Schwierigkeiten verstärken sich naturgemäß, wenn dem in der Praxis bestehenden Bedürfnis nach immer höheren Durchsatzleistungen entsprochen werden soll.

Aus der GB-A- 811 353 ist eine Palettiermaschine zum lagenweisen Stapeln von Stückgut auf einer Ladeplattform, mit einem eine Anlaufleiste aufweisenden Einlaufförderer und einer diesem nachgeschalteten Zwischenstation, auf der mittels eines Überführungsgliedes die Stückgüter lagenweise zusammengesetzt werden, wobei die Anlaufleiste von dem anliegenden Stückgut wegbewegbar ist und die zunächst leere Ladepalette aus einer höchsten Stellung unter Fortschreiten der Stapelbildung in eine tiefste Stellung absenkbar ist, bekannt. Nachteilig bei dieser bekannten, gattungsmäßig unterschiedlichen Palettiermaschine ist insbesondere, daß die Lagenabsenkung durch eine geradlinig zu-rückziehbare Tischplatte vorgenommen wird, die Stückgutlagen besonders schonend aufnehmenden Gabelheber fehlen hier.

Bei einer weiteren bekannten Vorrichtung (DE-A- 2 500 077) wird u.a. auf einer tiefliegenden Palette der Stapel gebildet, so daß durch die langen Hubbewegungen hier ebenfalls eine Beschränkung der Stapelbildung gegeben ist, da die Gabelheber wenigstens zu Beginn der Stapelbildung bis auf die in der tiefsten Ebene der Abförder-Rollenbahn befindlichen Paletten abgesenkt werden muß.

Aufgabe der Erfindung ist die Schaffung einer Lösung, welche auch bei erhöhter Durchsatzleistung eine besonders schonende Behandlung der einzelnen Stückgüter und damit gleichmäßige und formstabile Stapel gewährleistet.

Bei einer Vorrichtung der eingangs bezeichneten Art wird diese Aufgabe gemäß der Erfindung dadurch gelöst, daß die Rollen der Einlaufrollenbahn mit zur Anlaufleiste hin abnehmender Geschwindigkeit antreibbar sind, daß die Anlaufleiste nach Bildung einer Stückgutzeile vor dem Tätigwerden des Überführungsgliedes zum Verbringen der Stückgutzeile in die Zwischenstation von dem anliegenden Stückgut wegbewegbar ist, und daß die zunächst leere Ladepalette aus einer höchsten Stellung unter fortschreitender Stapelbildung in eine tiefste absenkbar ist.

Aufgrund dieser Ausbildung wird erreicht, daß selbst bei wesentlich erhöhter Durchsatzleistung und damit Zufuhrgeschwindigkeit zur Einlaufrollenbahn die einzelnen Stückgüter zum Ende der Einlaufrollenbahn hin derart abgebremst werden, daß Deformationen an der Anlaufleiste kaum noch auftreten und darüber hinaus auch trotz erhöhter Überführungsgeschwindigkeit von der Einlaufrollenbahn zur Zwischenstation keinerlei Verdrehungen der betreffenden Stückgutzeile von dem der Anlaufleiste anliegenden Stückgut mehr ausgehen können, da vorher die Anlaufleiste ausreichend weit von dem gegenüberliegenden Stückgut fortbewegt wird, wobei die für das Abbremsen der Stückgüter zum Ende der Einlaufrollenbahn hin sowie das Wegbewegen der Anlaufleiste erforderliche Zeit vor allem dadurch mehr als kompensiert wird, daß jeweils eine fertig gebildete Stückgutlage nach dem Anheben von der Zwischenstation nur noch ein kurzes Stück aus einer Stellung vor und oberhalb der Abstreifer abwärts gesenkt zu werden braucht, da das Abstreifen kurz unterhalb der oberen Enden der Abstreifer erfolgt und was von zusätzlichem Vorteil ist, damit immer gleiche Zeit benötigt, so daß auch alle sonstigen Taktzeiten der Vorrichtung gleich bleiben können.

Im einzelnen kann man dabei die Rollen der Einlaufrollenbahn gruppenweise antreibbar und die einzelnen Antriebe gesondert ein- und ausschaltbar ausgestalten, wobei beispielsweise die letzten bzw. der Anlaufleiste benachbarten Rollen überhaupt nicht angetrieben werden können. Die Aufteilung der verschiedenen Rollengruppen sowie die Wahl der verschiedenen Geschwindigkeiten sowie Antriebs- und Stillstandszeiten kann in Abhängigkeit von der jeweiligen Beschaffenheit der zu fördernden Stückgüter variiert werden.

Eine besonders einfache Ausführungsform erhält man, wenn man Rollen gleichen Durchmessers der Einlaufrollenbahn durch zur Anlaufleiste zunehmenden Durchmesser aufweisende, von einem gemeinsamen Endlos-Antriebsorgan, wie einer Kette, einem Keilriemen o. dgl. angetriebene Antriebsmittel, wie Ritzel, Riemenscheiben o. dgl. antreibt.

Ferner empfiehlt es sich, die ersten Rollen der Einlaufrollenbahn mit reibungsverstärkenden Oberflächen zu versehen, um jedenfalls die Anfangszufuhrgeschwindigkeit der Stückgüter möglichst hoch zu erhalten, auch dann, wenn das jeweilige Stückgut aus dem Stillstand, beispielsweise herkommend von einem vorgeschalteten Taktband, beschleunigt werden muß.

Ferner kann es zweckmäßig sein, mindestens die letzten Rollen der Einlaufrollenbahn mit einer gegenüber ihrem angetriebenen Kern drehbaren Außenhülse zu versehen, so daß gegeneinander aufgelaufene Stückgüter bei noch angetriebenen Rollen ohne Drehung der betreffenden Außenhülsen auf diesen ruhen können, was weiter zu einer schonenden Behandlung der Stückgüter beiträgt.

Die Anlaufleiste selbst kann jeweils nach Bildung einer Stückgutzeile in konstruktiv besonders einfacher Weise mittels antreibbarer Parallelogramm-Lenker so weit weggeschwenkt werden, daß die nachfolgende Überführung auf die Zwischenstation keine Beeinträchtigung der räumlichen Lage der betreffenden Stückgutzeile ergibt.

Bei einer Vorrichtung, deren vorgeschaltete Förderanlage wie üblich eine Wendenase für das Drehen einlaufender Stückgüter um 90° zur Bildung der verschiedenen Stückgutzeilen aufweist, kann man zur Anpassung an die angestrebten höheren Durchsatzleistungen der Wendenase einen Wendebeschleuniger zuordnen, der vorzugsweise als in der Nähe der Wendenase drehbar gelagertes Flügelrad ausgebildet sein kann, welches im wirksamen Segmentbereich jedes Flügels mit zunehmender Geschwindigkeit antreibbar ist, derart, daß jeweils ein Flügel den hinteren Bereich des jeweiligen Stückgutes nach vorn zu drehen hilft, wodurch auch die Gesamtbeanspruchung des betreffenden Stückgutes beim Drehvorgang herabgesetzt wird, da nunmehr von beiden Enden des Stückgutes her ein annähernd gleichmäßiger Kraftangriff erfolgt bzw. Drehmoment ausgeübt wird.

Um die Rückzugsbewegung der Zinken des Gabelhebers durch die Abstreifer noch weiter erhöhen bzw. die dabei erfolgende Beanspruchung der Stückgüter zu vermindern, kann man in Weiterbildung der Erfindung die einzelnen hohl ausgebildeten Zinken des Gabelhebers über einen hohlen Verbindungsbalken mit Druckluft beaufschlagen, die dann durch in der den Stückgütern gegenüberliegenden Fläche angeordnete Öffnungen austritt.

Weiterhin kann man auch noch mindestens die mittleren Gabelzinken des Gabelhebers mit oberen Führungsleisten versehen, wodurch vor allem bewirkt werden soll, daß bei einem sogenannten Kaminverband kein Drehen der im Bereich der freien Gabelzinkenenden aufliegenden Säcke bei der Rückziehung der Gabelzinken in den mittigen Hohlraum hinein erfolgt.

Schließlich kann die vorgeschaltete Förderanlage auch noch mindestens ein der Einlaufrollenbahn unmittelbar benachbartes, gesondert ein- und ausschaltbares Förderorgan bzw. ein sogenanntes Taktband aufweisen. Dadurch soll erreicht werden, daß die bei hohen Zuführgeschwindigkeiten von den vorgeschalteten Förder- und Behandlungsorganen nicht ausreichend zeitlich exakt zugeführten Stückgüter ganz genau der präzise ab der Einlaufrollenbahn im Takt arbeitenden Vorrichtung am Beginn der Einlaufrollenbahn zugeführt werden, wobei je nach der Höhe der gewünschten Durchsatzleistung ein oder zwei solche Taktbänder bzw. gesondert ein- und ausschaltbare Förderorgane vorgesehen werden können.

Die Erfindung ist nachstehend anhand der Zeichnung beispielsweise näher erläutert. Diese zeigt in

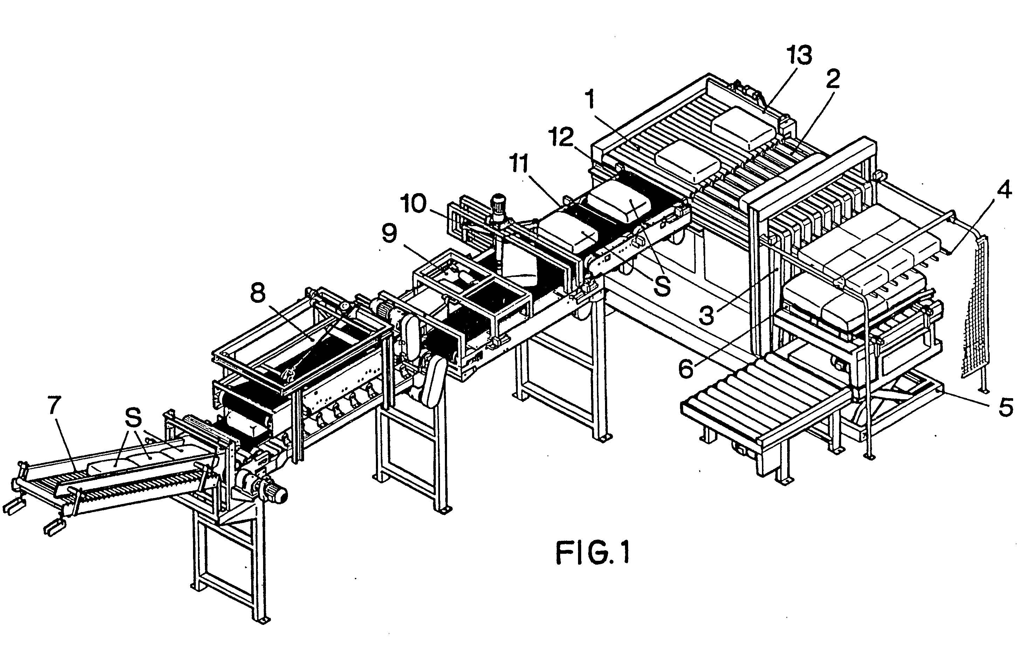

Fig. 1 eine Vorrichtung gemäß der Erfindung in perspektivischer Gesamtdarstellung,

Fig. 2 eine schematische Seitenansicht einer Einlaufrollenbahn mit Anlaufleiste der erfindungsgemäßen Vorrichtung,

Fig. 3 eine Draufsicht auf die Anlaufleiste gemäß Fig. 2,

Fig. 4 eine schematische Seitenansicht eines Wendebeschleunigers der erfindungsgemäßen Vorrichtung,

Fig. 5 eine Draufsicht auf den Vorrichtungsteil gemäß Fig. 4,

Fig. 6 einen Gabelheber der erfindungsgemäßen Vorrichtung in Seitenansicht,

Fig. 7 den Gabelheber gemäß Fig. 6 in Stirnansicht,

Fig. 8 einen vertikalen Längsschnitt durch eine Gabelzinke des Gabelhebers gemäß Fig. 6 und 7 in vergrößerter Darstellung,

Fig. 9 einen Vertikalquerschnitt durch eine Gabelzinke des Gabelhebers gemäß Fig. 6 und 7 in vergrößerter Darstellung,

Fig. 10 eine Draufsicht auf den Gabelheber gemäß Fig. 6 und 7 mit einer Sacklage im sogenannten Vierer-Kaminverband und in

Fig. 11 eine Seitenansicht einer Hubeinrichtung für die Ladepalette in schematischer Darstellung.

Die eigentliche Vorrichtung gemäß der Erfindung besteht im wesentlichen aus einer Einlaufrollenbahn 1, einer Zwischenstation 2, vertikalen Abstreifern 3, einem zwischen diesen zurückziehbaren Gabelheber 4 und einer Hubein-

richtung 5 für eine Ladepalette 6. Ferner ist zwischen Einlaufrollenbahn 1 und Zwischenstation 2 ein nicht näher dargestelltes Überführungsglied vorgesehen, das zinkenartig zwischen den einzelnen Rollen der Einlaufrollenbahn 1 anhebbar ist, um jeweils eine auf der Einlaufrollenbahn gebildete Stückgutzeile auf die Zwischenstation 2 zu überführen.

Bei dem in der Zeichnung wiedergegebenen Ausführungsbeispiel sind die Stückgüter als Säcke S wiedergegeben, die von einer der Vorrichtung vorgeschalteten, nicht gezeigten Absackanlage in Längsrichtung mehr oder weniger kontinuierlich angefördert werden.

Zwischen Absackanlage und einlaufrollenbahn ist eine Förderanlage vorgesehen, die eine Staurollenbahn 7, eine Sackglätteinrichtung 8, einen Seitenversetzer, z.B. einen Schieber 9, eine Wendevorrichtung 10 sowie zwei hintereinander geschaltete Taktbänder 11 und 12 aufweist.

In groben Zügen ist die Arbeitsweise der Vorrichtung dabei wie im wesentlichen bekannt derart, daß die von der Absackanlage herkommenden einzelnen Säcke S auf der Staurollenbahn 7 angestaut werden können und von dieser im vorbestimmten Takt über eine am Ende der Staurollenbahn 7 angeordnete Zuteilvorrichtung der von zwei Förderbändern gebildeten Sackglätteinrichtung 8 zugeführt wird, zwischen denen durchlaufend die Säcke praktisch gebügelt werden, um gleichmäßige Konturen für die nachfolgende Bildung der Stapel zu haben. Der dann nachgeschaltete Schieber 9 dient dazu, einzelne Säcke je nach dem gewünschten Packmuster seitlich zu verschieben, während die dem Pusher noch nachgeschaltete Wendevorrichtung 10 einzelne Säcke um 90° verdreht, wie dies nachfolgend noch näher erläutert wird.

Die dann nachgeschalteten Taktbänder 11 und 12 dienen zum evtl. kurzzeitigen Anhalten einzelner Säcke, um diese dann exakt zum richtigen Zeitpunkt der Einlaufrollenbahn 1 zuzuführen.

Jede auf der Einlaufrollenbahn 1 gebildete und durch Anlaufen gegen eine am Ende derselben angeordnete Anlaufleiste 13 zum Stillstand gekommene Sackzeile wird dann nachfolgend von einem zeichnerisch nicht dargestellten Überführungsglied auf die von stationären Tragschienen gegildete Zwischenstation 2 überführt, wobei im Regelfall zwei oder mehr Sackzeilen nacheinander von der Einlaufrollenbahn 1 auf die Zwischenstation unter Bildung einer kompletten Sacklage überführt bzw. zusammengestellt werden. Die fertige Sacklage wird dann mittels eines zinkenförmigen Gabelhebers 4 angehoben, vor im wesentlichen vertikale Abstreifer 3 gebracht und dann auf eine im leeren Zustand in ihrer höchsten Stellung befindliche Ladepalette 6 agbesenkt, dann zwischen den Abstreifern 3 zurückgezogen und in die Ausgansposition für das Anheben einer neuen Sacklage zurückverbracht.

Die erfindungswesentlichen Teile der Vorrichtung werden nachfolgend im einzelnen näher erläutert:

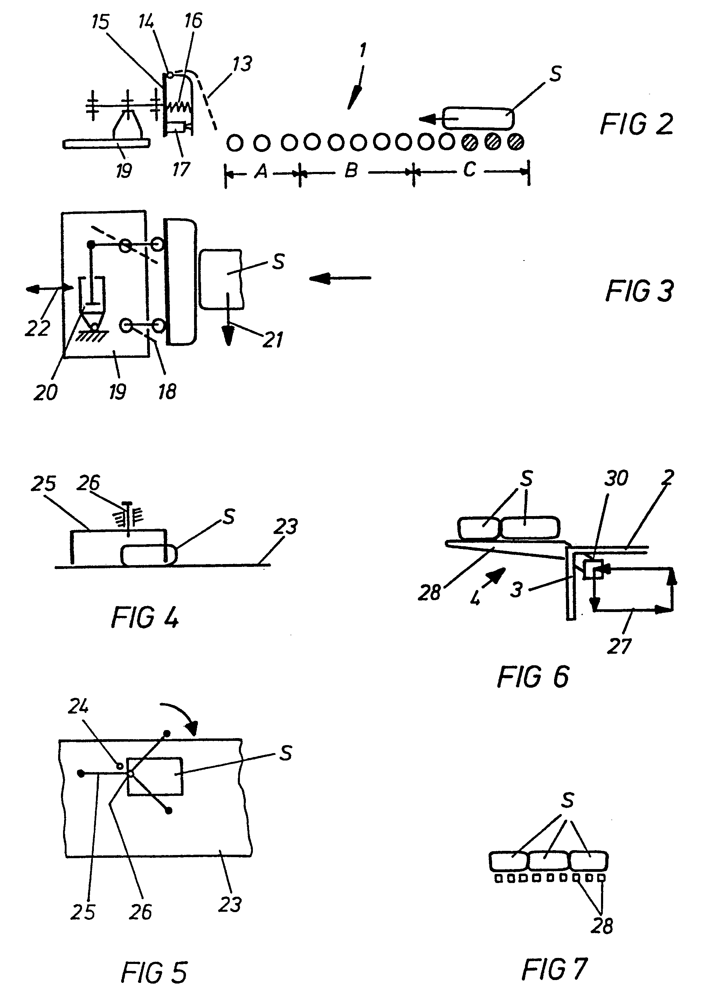

Bei der in Fig. 2 wiedergegebenen Einlaufrollenbahn 1 sind drei Gruppen von rollen A, B, C vorgesehen, von denen beispielsweise die der Anlaufleiste 13 benachbarte Gruppe A nicht angetrieben sein kann, während die Gruppen B und C mit unterschiedlichen Geschwindigkeiten zu unterschiedlichen Zeiten antreibbar sind.

Die ersten Rollen der Gruppe C weisen eine reibungsverstärkende Oberfläche auf, können beispielsweise zu diesem Zweck gummiert sein, womit bewirkt werden soll, daß die Anfangsförderung der von dem benachbarten Taktband 12 kommenden Stückgüter S sehr schnell erfolgt, wobei dann eine nachfolgende Reduzierung der Geschwindigkeit im Bereich der Rollengruppe B erfolgt sowie eine weitere Reduzierung im Bereich der nicht angetriebenen Rollengruppe A. Die Aufteilung der Gruppen A, B und C erfolgt in Abhängigkeit von der Beschaffenheit der zu fördernden Säcke. Ebenfalls können die Geschwindigkeiten und die Antriebs- bzw. Stillstandszeiten der einzelnen Rollengruppen in Abhängigkeit von der Beschaffenheit der speziellen Stückgüter variiert werden.

Abgesehen von den ersten mit reibungsverstärkenden Oberflächen versehenen Rollen können alle anderen Rollen einen Antriebskern sowie eine auf diesem mit einem gewissen Reibschluß drehbare Außenhülse aufweisen, damit ggf. bei zum Stillsand gekommenen Säcken einzelne Rollen kurzzeitig weiterlaufen können, ohne den Sack zu deformieren.

Wie erkennbar ist, kann eine Reduzierung der Fördergeschwindigkeit der Einlaufrollen zur Anlaufleiste 13 hin auch dadurch erfolgen, daß alle Rollen über eine gemeinsame, hinsichtlich ihrer Geschwindigkeit steuerbare Antriebskette oder Riemen angetrieben werden, wobei die einzelnen Rollen mit der Antriebskette oder dem Riemen in Antriebsverbindung stehende, zur Anlaufleiste hin zunehmend größeren Durchmesser aufweisende Antriebsritzel oder Scheiben aufweisen. Auch in diesem Fall kann eine Gruppe von der Anlaufleiste 13 unmittelbar benachbarten Rollen nicht angetrieben sein.

Die Anlaufleiste 13 besteht in an sich bekannter Weise aus einem um eine obere Horizontalachse 14 verschwenkbaren winkelförmigen Blech, wobei an einer vertikalen Tragplatte 15 eine Druckfeder 16 angeordnet ist, welche das Anlaufblech 13 beim Gegenlaufen eines Sackes S abfedert. Ferner ist zwischen Tragplatte 15 und Anlaufblech 13 ein Endschalter 17 angeordnet, wobei die Druckfeder 16 derart ausgelegt ist, daß der Endschalter 17 in Verbindung mit nicht dargestellten, oberhalb der Einlaufrollenbahn angeordneten Fotozellen die Gruppen B und C der Einlaufrollenbahn schaltet und gleichzeitig die Geschwindigkeit der anlaufenden Säcke in Verbindung mit der Reduzierung der Geschwindigkeit der Einlaufrollen langsam auf Null reduziert, so daß eine Deformation der Säcke beim Anlaufen gegen das Einlaufblech praktisch nicht mehr auftritt.

Die Tragplatte 15 ist mittels Parallelogrammlenkern 18 an einer Grundplatte 19 gelagert, wobei an einem der Lenker 18 eine pneumatische — oder hydraulische Kolbenzylindereinheit 20 gelenkig angreift, deren anderes Ende gelenkig an der Grundplatte 19 gelagert ist.

Aufgrund dieser Ausbildung kann nach dem Anlaufen einer vollständigen Sackzeile das Anlaufblech 13 von dem zunächst anliegenden Sack weggeschwenkt werden, wie Fig. 3 gestrichelt zeigt, so daß dann nachfolgend die gesamte Sackzeile ohne die Gefahr des Drehens des der Anlaufleiste benachbarten Sackes senkrecht zur Zufuhrrichtung der Säcke, d.h. in Richtung des Pfeiles 21 der Fig. 3 von der Einlaufrollenbahn 1 auf die Zwischenstation 2 gefördert werden kann.

Die Grundplatte 19 kann mittels einer nicht dargestellten Mechanik in Richtung des Pfeiles 22 der Fig. 3 verschoben werden, um die Position einer Sackzeile gegenüber einer vorherigen Sackzeile verändern zu können, beispielsweise dann, wenn für die sogenannte palettenlose Paketierung eine Sonderlage mit seitlichen zurückspringenden Bereichen für das Angreifen von Gabelzinken gebildet werden soll.

Im Bereich der der Einlaufrollenbahn vorgeschalteten Wendevorrichtung 10 ist oberhalb eines Förderbandes 23 eine übliche Wendenase 24 angeordnet, gegen die ein Sack S in üblicher Weise im Eckenbereich anläuft und dabei von dem Förderband 23 um 90° gedreht wird. Um diese Bewegung zu beschleunigen, ist in der Nähe der Wendenase 24 ein als Flügelrad ausgebildeter Wendebeschleuniger 25 um eine vertikale Achse 26 drehbar gelagert. Das Flügelrad ist derart bemessen und angetrieben, daß die einzelnen Flügelarme einen in Längsrichtung ankommenden Sack etwa gleichzeitig mit dem Anlaufen seiner vorderen Ecke gegen die Wendenase 24 im hinteren Eckenbereich ergreifen und den Drehvorgang um 90° zunehmend beschleunigen, wobei sich eine besonders schonende Behandlung der Säcke durch einen gleichmäßigen Kraftangriff bzw. die Aufbringung etwa gleichförmiger Drehmomente an beiden Enden des Sackes ergibt.

Wie Fig. 6 schematisch andeutet, ist der zinkenförmige Gabelheber 4 in einer schematisch angedeuteten, geschlossenen, im wesentlichen rechteckförmigen Bahnkurve 27 bewegbar, derart, daß die einzelnen Zinken 28 des Gabelhebers zwischen den ortsfesten Tragschienen der Zwischenstation 2 zum Ergreifen einer fertig gebildeten Sacklage anhebbar sind, dann vor die im wesentlichen vertikalen Abstreifer 3 bewegt und darauf soweit abgesenkt werden, bis die Ladepalette 6 oder eine schon vorher auf dieser abgesetzte Sacklage erreicht ist und daraufhin durch die senkrechten Abstreifer 3 unter Abstreifen bzw. Absetzen der betreffenden Sacklage zurückgezogen werden, worauf der Gabelheber wieder aufwärts in seine Ausgangsposition für ein neues Arbeitsspiel zurückbewegt wird. Im Gegensatz zu der bisherigen Konstruktion, bei der die Absenkbewegung des Gabelhebers jeweils bis zur tiefsten Stellung der Ladepalette erfolgen muß, kann die Vertikalbewegungskomponente des Gabelhebers sehr gering gehalten werden, wodurch sich eine entscheidende Zeitersparnis ergibt, die an anderen Stellen der Vorrichtung zu einer schonenden Sackbehandlung, insbesondere der Verzögerung der Säcke am Ende der Einlaufrollenbahn, wie vorgeschildert, benutzt werden kann.

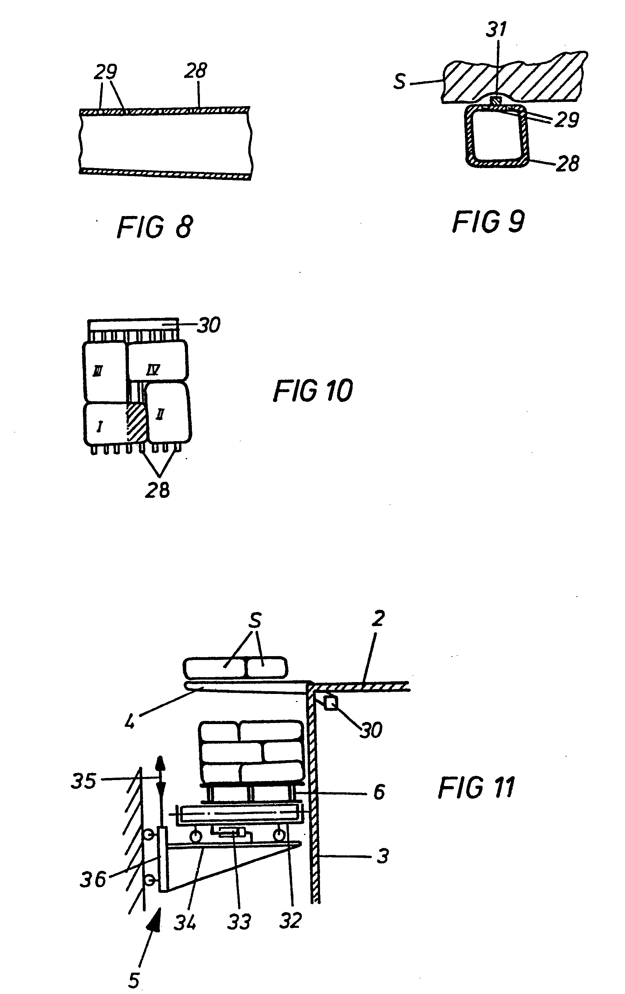

Im einzelnen ist jede Gabelzinke 28 (s. Fig. 8 und 9) hohl ausgebildet und im Bereich ihrer oberen Wandung mit Öffnungen 29 versehen, durch die über einen hohlen Verbindungsbalken 30 (s. Fig. 6) zugeführte Druckluft entweichen kann, was zu einem schonenden Abziehen der Gabelzinken unterhalb der Säcke beiträgt, so daß auch die Abziehbewegung stark beschleunigt erfolgen kann.

Mindestens die mittleren Gabelzinken 28 sind ferner mit oben abgerundeten Führungsleisten 31 versehen (s. Fig. 9), die dazu dienen sollen, daß bei einem in Fig. 10 wiedergegebenen sogenannten Vierer-Kaminverband der betreffenden Sacklage der den freien Gabelzinkenenden benachbarte, quer zur Rückziehbewegung der Gabelzinken angeordnete Sack I sich beim Zurückziehen der Gabelzinken nicht in den inneren Hohlraum mit seinem gestrichelt in Fig. 10 angedeuteten Bereich hinein verdreht, wodurch die Gleichförmigkeit der Sacklage beim Absetzen auf die Ladepalette bzw. die vorher auf diese abgesetzte Sacklage leiden könnte.

Wie Fig. 11 zeigt, ruht die Ladepalette 6 auf einer antreibbaren Förderrollenbahn 32, die mittels einer pneumatisch oder hydraulisch angetriebenen Kolbenzylindereinheit 33 auf Schienen 34 hin und her verfahrbar ist, wobei die Schienen 34 an einem vertikal in Richtung des Doppelpfeiles 35 verfahrbaren Hubwagen 36 angeordnet sind.

Die Arbeitsweise dieses Teils der Vorrichtung ist derart, daß der Hubwagen 36 mit Förderrollenbahn 32 und auf dieser aufruhenden leeren Ladepalette 6 zunächst in seine höchste Stellung gebracht wird, worauf die erste Sacklage in der zuvor beschriebenen Weise mittels des Gabelhebers 4 abgesetzt wird, worauf der Hubwagen 36 um die Höhe einer Sacklage abwärts fährt, worauf die nächste Sacklage auf der vorher abgesetzten Sacklage abgelegt bzw. abgestreift wird, bis schließlich der Stapel fertig gebildet ist. Die Verfahrbarkeit der Förderbahn 32 längs der Schienen 34 ist dabei deshalb vorgesehen, damit nach dem Absetzen jeder Sacklage die Säcke einmal von den Abstreifern entfernt werden, so daß ein beim Abstreifen etwa eingetretenes Anstauen im Bereich der Abstreifer beseitigt wird, um jeweils eine völlig gleichmäßige Sacklage zu erzielen, wobei das zunächst eintretende geringflügige Anstauchen und dadurch bedingte leichte seitliche Überhängen durch leichte Neigung des oberen Endes der Abstreifer in Richtung auf den Sackstapel zu in bekannter Weise ausgleichbar ist.

Die im einzelnen nicht näher dargestellten Taktbänder 11 und 12 halten die einzelnen Säcke im Bedarfsfall kurzzeitig (Sekundenbruchteil) an und führen sie dann im exakten Takt der Einlaufrollenbahn 1 zu, da alle der Einlaufrollenbahn nachgeschalteten Teile der Vorrichtung ganz präzise im Takt arbeiten müssen, wobei es sich bei den einzelnen Taktzeiten ebenfalls nur um Sekundenbruchteile handelt. Bei mittleren Leistungen kann dabei ein Taktband ausreichend sein. Bei hohen Durchsatzleistungen bis zu 2.600 Säcken pro Stunde sind jedoch zwei Taktbänder erforderlich, um Beeinträchtigungen der lage der Säcke untereinander vor dem Zuführen zur Einlaufrollenbahn sicher zu vermeiden.

Natürlich sind die beschriebenen Ausführungsbeispiele in vielfacher Weise abzuändern, ohne den Grundgedanken der Erfindung zu verlassen. So kann beispielsweise das Absenken des Hubwagens 36 auch in größeren Stufen erfolgen, als dies der Höhe der einzelnen Sacklagen entspricht, wobei dann die Absenkbewegung des Gabelhebers 4 entsprechend abgestuft größer gewählt werden müßte. Anstelle des Flügelrades könnte natürlich auch eine andere Form eines Wendebeschleunigers gewählt werden, beispielsweise ein einzelner hin und her gehender, im hinteren Eckenbereich des jeweils ankommenden Sackes angreifender Schwenkarm. Der Antrieb für den Gabelheber 4 kann wegen der nunmehr nur noch geringfügig erforderlichen Vertikalbewegungskomponente wesentlich einfacher als bei der bisher bekannten Konstruktion ausgebildet werden, bei der eine Vertikalbewegung über die volle Stapelhöhe erforderlich ist, so daß ggf. an Stelle eines waagerecht verfahrbaren Laufwagens mit einem vertikalen Führungsgerüst für den Gabelheber ein stationäes Koppelkurvengetriebe Verwendung finden könnte oder aber ein horizontal verfahrbarer einfacher Laufwagen mit an diesem angelenkten, den Gabelheber tragenden kreisförmig bewegten Parallel-Lenkern. Die Zuführung der leeren Ladepaletten kann jeweils bei oben befindlicher Förderrollenbahn 32 erfolgen, anstatt in unterer Position wie bisher. Natürlich kann die ganze Vorrichtung zur sogenannten palettenlosen Paketierung, d.h. Herstellung eines allseitig mit einer Schrumpffolie umhüllten Stapels mit Hohlräumen zum Angreifen von Hubelementen, auch ohne Ladepalletten verwendet werden, da der Stapel dann einfach auf der Förderrollenbahn 32 gebildet werden kann. Auch könnte anstelle der gezeigten Taktbänder 11, 12 eine Staurollenbahn verwendet werden u. dgl. mehr.

## Patentansprüche

1. Vorrichtung zum lagenweisen Stapeln von Stückgut auf einer Ladepalette, mit einer eine Anlaufleiste (13) aufweisenden Einlaufrollenbahn (1) und einer dieser nachgeschalteten, aus ortsfesten Tragschienen gebildeten Zwischenstation (2), auf der von einer Förderanlage der Einlaufrollenbahn zugeführte Stückgüter mittels eines Überführungsgliedes lagenweise zusammengesetzt werden, und mit einem in einer geschlossenen Bahnkurve bewegten Gabelheber (4), welcher jeweils eine Stückgutlage in der Zwischenstation aufnimmt, hochhebt, vor im wesentlichen senkrechte Abstreifer (3) bewegt und auf die Ladepalette absenkt und anschließend durch die Abstreifer hindurch zurückgezogen wird, dadurch gekennzeichnet, daß die Rollen der Einlaufrollenbahn (1) mit zur Anlaufleiste (13) hin abnehmender Geschwindigkeit antreibbar sind, daß die Anlaufleiste (13) nach Bildung einer Stückgutzeile vor dem Tätigwerden des Überführungsgliedes zum Verbringen der Stückgutzeile in die Zwischenstation (2) von dem anliegenden Stückgut (S) weg bewegbar ist und daß die zunächst leere Ladepalette (6) aus einer höchsten Stellung unter fortschreitender Stapelbildung in eine tiefste Stellung absenkbar ist.

2. Vorrichtung nach Anspruch 1, dadurch gekennzeichnet, daß die Rollen der Einlaufrollenbahn (1) gruppenweise (A, B, C) antreibbar und die einzelnen Antriebe gesondert ein- und ausschaltbar sind.

3. Vorrichtung nach Anspruch 1, dadurch gekennzeichnet, daß Rollen gleichen Durchmessers der Einlaufrollenbahn (1) durch zur Anlaufleiste (13) zunehmenden Durchmesser aufweisende, von einem gemeinsamen Endlos-Antriebsorgan, wie einer Kette, einem Keilriemen o. dgl. angetriebene Antriebsmittel, wie Ritzel, Riemenscheiben o. dgl. antreibbar sind.

4. Vorrichtung nach Anspruch 1 oder einem der folgenden, dadurch gekennzeichnet, daß die ersten Rollen der Einlaufrollenbahn (1) reibungsverstärkende Oberflächen aufweisen.

5. Vorrichtung nach Anspruch 1 oder einem der folgenden, dadurch gekennzeichnet, daß mindestens die letzten Rollen der Einlaufrollenbahn (1) eine genüber ihrem angetriebenen Kern drehbare Außenhülse aufweisen.

6. Vorrichtung nach Anspruch 1 oder einem der folgenden, dadurch gekennzeichnet, daß die Anlaufleiste (13) mittels antreibbarer Parallelogramm-Lenker (18) wegschwenkbar ist.

7. Vorrichtung nach Anspruch 1 oder einem der folgenden, deren vorgeschaltete Förderanlage eine Wendenase (24) für das Drehen einlaufender Stückgüter um 90° aufweist, dadurch gekennzeichnet, daß der Wendenase (24) ein Wendebeschleuniger (25) zugeordnet ist.

8. Vorrichtung nach Anspruch 7, dadurch gekennzeichnet, daß der Wendebeschleuniger (25) als in der Nähe der Wendenase (24) drehbar gelagertes Flügelrad (25) ausgebildet ist, welches im wirksamen Segmentbereich jedes Flügels mit zunehmender Geschwindigkeit antreibbar ist.

9. Vorrichtung nach Anspruch 1 oder einem der folgenden, dadurch gekennzeichnet, daß die einzelnen hohl ausgebildeten Zinken (28) des Gabelhebers (4) über einen hohlen Verbindungsbalken (30 mit Druckluft beaufschlagt sind, die durch in der den Stückgütern (S) gegenüberliegenden Fläche angeordnete Öffnungen (29) austritt.

10. Vorrichtung nach Anspruch 1 oder einem der folgenden, dadurch gekennzeichnet, daß mindestens die mittleren Gabelzinken (28) des Gebelhebers (4) mit oberen Führungsleisten (31) versehen sind.

11. Vorrichtung nach Anspruch 1 oder einem der folgenden, dadurch gekennzeichnet, daß die vorgeschaltete Förderanlage mindestens ein der Einlaufrollenbahn (1) unmittelbar benachbartes, gesondert ein- und ausschaltbares Förderorgan (11, 12) aufweist.

## Claims

1. Apparatus for stacking piece goods in layers on a loading pallet, comprising an intake roller track (1) having a check bar (13), and an intermediate station which is disposed downstream of the roller track (1) and which is formed from stationary support rails and on which piece goods supplied to the intake roller track by a conveyor means are assembled in layers by means of a transfer means, and having a fork lift (4) which is moved in a closed track curve and which respectively receives a layer of piece goods in the intermediate station, raises said layer, moves it in front of substantially vertical strippers (3) and lowers it on to the loading pallet, and is subsequently retracted through the strippers, characterised in that the rollers of the intake roller track (1) are capable of being driven at a speed which decreases towards the check bar (13), that the check bar (13), after the formation of a line of piece goods, before the transfer means becomes operative for moving the line of piece goods into the intermediate station (2), is capable of being moved away from the piece goods (S) lying thereagainst, and that the next empty loading pallet (6) is capable of being lowered from an uppermost position into a lowermost position, with progressive formation of a stack.

2. Apparatus according to claim 1 characterised in that the rollers of the intake roller track (1) are capable of being driven in groups (A, B, C) and the individual drives are capable of being switched on and off separately.

3. Apparatus according to claim 1 characterised in that the rollers of the same diameter of the intake roller track (1) are capable of being driven by drive means such as pinions, belt pulleys or the like, which are of increasing diameter towards the check bar (13) and are driven by a common endless drive member such as a chain, a V-belt or the like.

4. Apparatus according to claim 1 or one of the following claims characterised in that the first rollers of the intake roller track (1) have friction-enhancing surfaces.

5. Apparatus according to claim 1 or one of the following claims characterised in that at least the last rollers of the intake roller track (1) have an outer casing which is rotatable with respect to their driven core portion.

6. Apparatus according to claim 1 or one of the following claims characterised in that the check bar (13) is capable of being pivoted away by means of drivable parallelogram links (18).

7. Apparatus according to claim 1 or one of the following claims, wherein the conveyor means which is disposed upstream thereof has a turning projection (24) for rotating incoming piece goods through 90°, characterised in that a turning accelerating means (25) is associated with the turning projection (24).

8. Apparatus according to claim 7 characterised in that the turning accelerating means (25) is in the form of a wheel (25) with arms, which is mounted rotatably in the vicinity of the turning projection (24) and which is capable of being driven with increasing speed in the operative segment region of each arm.

9. Apparatus according to claim 1 or one of the following claims characterised in that the individual prongs (28) of the fork lift (4), which are of a hollow construction, are supplied with compressed air by way of a hollow connecting beam (30), the compressed air issuing through apertures (29) disposed in the surface which is opposite the piece goods (S).

10. Apparatus according to claim 1 or one of the following claims characterised in that at least the middle fork prongs (28) of the fork lift (4) are provided with upper guide bars (31).

11. Apparatus according to claim 1 or one of the following claims characterised in that the conveyor means disposed upstream thereof has at least one conveyor member (11, 12) which is directly adjacent the intake roller track (1) and which is capable of being switched on and off separately.

## Revendications

1. Dispositif pour empiler en couches des marchandises empaquetées ou d'un seul tenant sur une palette de chargement, comportant un transrouleur d'entrée (1) comprenant une réglette d'accostage (13), et un poste intermédiaire (2) disposé en aval et constitué par des rails de support fixes, sur lequel des marchandises empaquetées ou d'un seul tenant amenées par une installation de transport du transrouleur d'entrée sont réunies en couches au moyen d'un organe de transfert, et comportant un élévateur à fourche (4 se déplaçant suivant une trajectoire fermée, qui prend respectivement une couche de marchandises dans le poste intermédiaire, remonte, avance au delà de racleurs (3) sensiblement verticaux et descend vers la palette de chargement, puis est ramené à travers les racleurs; caractérisé en ce que les rouleaux du transrouleur d'entrée (1) peuvent être entraînés avec une vitesse qui diminue en direction de la réglette d'accostage (13), que la réglette d'accostage (13) peut être écartée par la marchandise empaquetée ou d'un seul tenant (S) qui s'y appuie, après formation d'une rangée de marchandises, avant l'entrée en action de l'organe de transfert pour amener les rangées de marchandises empaquetées, ou d'un seul tenant, dans le poste intermédiaire (2), et que la palette de chargement (6) la première vide peut être descendue d'une position supérieure dans une position inférieure au fur et à mesure de la formation de la pile.

2. Dispositif suivant la revendication 1, caractérisé en ce que les rouleaux du transrouleur d'entrée (1) peuvent être entraînés par groupes (A, B, C) et que les entraînements individuels peuvent être mis en marche et arrêtés de façon distincte.

3. Dispositif suivant la revendication 1, caractérisé en ce que des rouleaux de même diamètre du transrouleur d'entrée (1) peuvent être entraînés par des moyens d'entraînement, tels que des pignons, des poulies ou des éléments semblables dont le diamètre augmente en direction de la réglette d'accostage (13), et qui sont entraînés par un organe d'entraînement sans fin commun, tel qu'une chaîne, une courroie trapézoidale ou un élément semblable.

4. Dispositif suivant la revendication 1 ou l'une des suivantes, caracterisé en ce que les premiers rouleaux du transrouleur d'entrée (1) possèdent une surface renforçant le frottement.

5. Dispositif suivant la revendication 1 ou l'une des suivantes, caractérisé en ce qu'au moins les derniers rouleaux du transrouleur d'entrée (1) comportent un manchon extérieur pouvant tourner par rapport à leur noyau entraîné.

6. Dispositif suivant la revendication 1 ou l'une des suivantes, caractérisé en ce que la réglette d'accostage (13) peut être écartée par pivotement, au moyen d'organes de guidage (18) en parallélogramme pouvant être entraînés.

7. Dispositif suivant la revendication 1 ou l'une des suivantes, dont l'installation de transport située en amont comporte un organe de changement de direction (24) pour faire tourner de 90° les marchandises qui arrivent, caractérisé en ce qu'à l'organe de changement de direction (24) est associé un accélérateur de changement de direction (25).

8. Dispositif suivant la revendication 7, caractérisé en ce que l'accélérateur de changement de direction (25) se présente sous la forme d'une roue à ailettes (25) montée de façon à pouvoir tourner au voisinage de l'organe de changement de direction (24) et pouvant être entraînée avec une vitesse croissante dans la région efficace de chaque ailette.

9. Dispositif suivant la revendication 1 ou l'une des suivantes, caractérisé en ce que les dents creuses individuelles (28) de l'élévateur à fourche (4) reçoivent, par l'intermédiaire d'une barre de couplage creuse (30), de l'air comprimé qui sort par des ouvertures (29) disposées dans les surfaces se trouvant en regard des marchandises (S).

10. Dispositif suivant la revendication 1 ou l'une des suivantes, caractérisé en ce qu'au moins les dents (28) situées au centre de l'élévateur à fourche (4) sont munies de réglettes de guidage supérieures (31).

11. Dispositif suivant la revendication 1 ou l'une des suivantes caractérisé en ce que l'installation de transport située en amont comporte au moins un organe de transport (11, 12) situé au voisinage immédiat du transrouleur d'entrée (1) et pouvant être mis en marche et arrêté de façon distincte.

FIG.1

FIG 2

FIG 3

FIG 4

FIG 6

FIG 5

FIG 7

2

FIG 8

FIG 9

FIG 10

FIG 11